# EUROPÄISCHE PATENTANMELDUNG

(11) **EP 4 726 336 A1**
(43) Veröffentlichungstag der Anmeldung: **15.04.2026**
(21) Anmeldenummer: 25200510.3
(22) Anmeldetag: 05.09.2025
(51) Int. Cl.: G01D 11/30, G01D 11/24, F16L 37/14, F16L 41/00, G01F 15/18, G01F 23/00, G01K 1/14, G01K 13/02, G01K 1/08

(54) **VERBINDUNGSVORRICHTUNG**

(30) Priorität: 14.10.2024 DE 102024129624
(71) Anmelder: SICK AG, 79183 Waldkirch (DE)
(72) Erfinder: SCHOLDER, Jochen, 79183 Waldkirch (DE); GRANER, Thomas, 79211 Denzlingen (DE)
(74) Vertreter: Manitz Finsterwald Patent- und Rechtsanwaltspartnerschaft mbB

(57) **Zusammenfassung**

Eine Verbindungsvorrichtung für einen Prozessanschluss an einem Sensorgehäuse umfasst einen inneren Anschlussabschnitt, der an dem Sensorgehäuse und dem Prozessanschluss angeordnet ist, einen äußeren Anschlussabschnitt, der den inneren Anschlussabschnitt umgibt und entweder an dem Prozessanschluss angeordnet ist, wenn der innere Anschlussabschnitt an dem Sensorgehäuse angeordnet ist, oder an dem Sensorgehäuse angeordnet ist, wenn der innere Anschlussabschnitt an dem Prozessanschluss angeordnet ist, und ein Federelement, das teilweise innerhalb des inneren Anschlussabschnitts angeordnet ist. Das Federelement weist mindestens drei Verbindungsabschnitte auf, die sich jeweils durch eine jeweilige Öffnung in dem inneren Anschlussabschnitt hindurch erstrecken und mit einer Innenseite des äußeren Anschlussabschnitts in Verbindung stehen.

## Beschreibung

Die Erfindung betrifft eine Verbindungsvorrichtung für einen Prozessanschluss an einem Sensorgehäuse.

Bestimmte Sensoren können zur Messung einer oder mehrerer Prozessgrößen zum Beispiel eines Mediums in einem Behälter verwendet werden. Solche Sensoren messen beispielsweise den Füllstand und/oder die Temperatur des Mediums im Behälter. Das entsprechende Messverfahren kann berührungslos sein, oder es kann zur Bestimmung der Prozessgröße eine Sonde eingesetzt werden, die in das Medium eintaucht.

Bei solchen Messverfahren ist es meistens erforderlich, dass der Behälter, der das Medium enthält, über einen sogenannten Prozessanschluss mit einem Gehäuse des Sensors verbunden wird. Zusätzlich zu einem solchen mechanischen Prozessanschluss kann auch eine elektrische Verbindung zwischen dem Behälter und dem Gehäuse des Sensors erforderlich sein, um die Messung der Prozessgröße durchführen zu können.

Zwischen dem Prozessanschluss und dem Sensorgehäuse kann beispielsweise eine verdrehsichere Verbindung durch Schweißen, Kleben oder ein Gewinde hergestellt werden. Verbindungen mittels Schweißen oder Kleben lassen jedoch keine drehbaren Ausführungen zu, falls eine Drehung des Prozessanschlusses gegenüber dem Sensorgehäuse erforderlich sein sollte. Schweiß- und Klebeprozesse sind ferner meistens aufwändig. Bei einer Gewindeverbindung kann eine elektrische Kontaktierung meistens nur mittels eines drehbaren Kontakts erfolgen, der sich auf einer Drehachse des Gewindes befindet. Ein drehbarer Kontakt ist jedoch teuer, und die Herstellung mehrerer solcher elektrischer Kontakte ist meist nur schwer möglich.

Um eine drehbare Verbindung zwischen dem Prozessanschluss und dem Sensorgehäuse herzustellen, kann ferner eine Schnappverbindung, eine Verbindung mittels Sicherungsring oder eine Verbindung mittels Stiften verwendet werden, die durch Bohrungen im Prozessanschluss hindurchgeschoben werden. Außerdem ist in der DE 10 2021 111 990 B3 eine Verbindung zwischen einem Prozessanschluss und einem Sensorgehäuse beschrieben, bei welchem das Gehäuse des Sensors und der Prozessanschluss am jeweiligen Außen- bzw. Innenumfang eine umlaufende Nut aufweisen, in der ein Fixierelement angeordnet ist.

Die mechanische Festigkeit einer Schnappverbindung zwischen Prozessanschluss und Gehäuse ist jedoch begrenzt, und es kann aufgrund unterschiedlicher Ausdehnungskoeffizienten von Elementen der Schnappverbindung zu Instabilitäten der Verbindung kommen, wenn sich die Temperatur in der Umgebung des Sensorgehäuses und des Prozessanschlusses ändert. Bei der Verwendung eines Sicherungsrings muss die Position zugänglich sein, an welcher der Sicherungsring eingefügt wird. Daher sind meist mehrere Gehäuseteile erforderlich. Dies verhindert das sogenannte "blinde Fügen" zwischen Prozessanschluss und Sensorgehäuse, das ein einziges Gehäuseteil erfordert. Ferner lässt die Verwendung eines Sicherungsrings meist keine Drehbegrenzung zwischen dem Prozessanschluss und dem Sensorgehäuse zu.

Bei der Verwendung von Stiften in Bohrungen zum Herstellen der Verbindung zwischen dem Prozessanschluss und dem Sensorgehäuse kann die Herstellung der Bohrungen für die Stifte aufwändig sein, insbesondere dann, wenn lange und dünne Bohrer auf schräg verlaufende Oberflächen treffen. Ferner kann es vorkommen, dass beispielsweise entsprechende lange und dünne Zylinderstifte nicht kommerziell verfügbar sind, so dass deren Herstellung mit zusätzlichen Kosten verbunden ist. Darüber hinaus erfordern Stifte eine Sicherung gegenüber Vibrationsbelastung und Herausrutschen aus der entsprechenden Bohrung. Eine solche Sicherung erfordert meist eine passgenaue und teure Herstellung von Schnittstellen und darüber hinaus das Einbringen eines Gewindes, einer Pressverbindung oder einer Sicherung mit Klebstoff. Es können jedoch keine Klebstoffe verwendet werden, die das Sensorgehäuse schädigen oder mit dem Medium reagieren, dessen Prozessgrößen ermittelt werden sollen. Außerdem ist es meist schwierig, mittels Stiften eine drehbare Verbindung mit Drehbegrenzung herzustellen.

Bei der Verbindung, wie sie in der DE 10 2021 111 990 B3 beschrieben ist, ist eine Vielzahl von Kleinteilen erforderlich, wodurch Kosten und Montageaufwand im Vergleich zu anderen Verbindungen erhöht sind. Darüber hinaus ist eine solche Verbindung von außen sichtbar, z.B. aufgrund von Schraubenköpfen der Verbindung, und die Verbindung ist von außen lösbar. Sichtbare Schraubenköpfe können in einem bestimmten Umfeld zu einer gewissen Anzahl von Schmutzkanten führen, was beispielsweise bei hygienischen Anwendungen nicht erwünscht ist. Ferner umfasst die in der DE 10 2021 111 990 B3 beschriebene Verbindung keine Drehbegrenzung.

Eine Aufgabe der Erfindung besteht darin, eine Vorrichtung zu schaffen, die eine robuste und zuverlässige Verbindung zwischen einem Prozessanschluss und einem Sensorgehäuse ermöglicht, welche mit geringen Kosten und einem geringem Montageaufwand verbunden ist und außerdem sowohl drehbar als auch verdrehsicher ausgeführt werden kann.

Diese Aufgabe wird durch eine Verbindungsvorrichtung mit den Merkmalen des Anspruchs 1 gelöst. Vorteilhafte Weiterbildungen der Erfindung sind in den Unteransprüchen, der Beschreibung und den Zeichnungen angegeben.

Die Verbindungsvorrichtung ist für einen Prozessanschluss an einem Sensorgehäuse vorgesehen und umfasst einen inneren Anschlussabschnitt, der an dem Sensorgehäuse oder an dem Prozessanschluss angeordnet ist, einen äußeren Anschlussabschnitt, der den inneren Anschlussabschnitt umgibt und entweder an dem Prozessanschluss angeordnet ist, wenn der innere Anschlussabschnitt an dem Sensorgehäuse angeordnet ist, oder an dem Sensorgehäuse angeordnet ist, wenn der innere Anschlussabschnitt an dem Prozessanschluss angeordnet ist, und ein Federelement, das teilweise innerhalb des inneren Anschlussabschnitts angeordnet ist. Das Federelement weist mindestens drei Verbindungsabschnitte auf, die sich jeweils durch eine jeweilige Öffnung in dem inneren Anschlussabschnitt hindurch erstrecken und mit einer Innenseite des äußeren Anschlussabschnitts in Verbindung stehen.

Der innere Anschlussabschnitt ist also entweder an dem Sensorgehäuse angeordnet, während der äußere Anschlussabschnitt an dem Prozessanschluss angeordnet ist, oder es ist umgekehrt der innere Anschlussabschnitt an dem Prozessanschluss angeordnet, während der äußere Anschlussabschnitt an dem Sensorgehäuse angeordnet ist. Der innere Anschlussabschnitt und der äußere Anschlussabschnitt greifen folglich sozusagen ineinander, wobei sie bei der Montage der Verbindungsvorrichtung bzw. bei der Herstellung der Verbindung entlang einer vordefinierten Achse in einer axialen Richtung bewegt werden. Der innere und der äußere Anschlussabschnitt können beispielsweise zylinderförmig ausgebildet sein, und sie können ohne das Federelement gegeneinander verschoben und verdreht werden.

Da das Federelement mindestens drei Verbindungsabschnitte aufweist, ermöglicht es eine Fixierung des inneren Anschlussabschnitts an dem äußeren Anschlussabschnitt gegenüber einer Verschiebung in seitlicher Richtung, z.B. in einer radialen Richtung, die senkrecht zu der axialen Richtung bzw. zu der gemeinsamen Achse des Prozessanschlusses und des Sensorgehäuses verläuft. Wenn der innere und der äußere Anschlussabschnitt beispielsweise zylinderförmig sind, ermöglichen drei Verbindungsabschnitte des Federelements eine stabile konzentrische Anordnung der zylinderförmigen Anschlussabschnitte. Darüber hinaus verhindert die Verbindung zwischen den Verbindungsabschnitten des Federelements und der Innenseite des äußeren Anschlussabschnitts eine Verschiebung in Längsrichtung zwischen dem inneren und dem äußeren Anschlussabschnitt bzw. zwischen dem Prozessanschluss und dem Sensorgehäuse, z.B. eine Verschiebung in der axialen Richtung entlang der gemeinsamen Achse des Prozessanschlusses und des Sensorgehäuses.

Die Verbindung zwischen den Verbindungsabschnitten des Federelements und der Innenseite des äußeren Anschlussabschnitts kann entweder kraftschlüssig ausgeführt sein, bei der das Federelement beispielsweise mit einer ausreichenden Kraft gegen eine Innenwand des äußeren Anschlussabschnitts drückt, um eine axiale Verschiebung zwischen dem inneren und äußeren Anschlussabschnitt zu verhindern. Alternativ oder zusätzlich kann die Verbindung zwischen den Verbindungsabschnitten des Federelements und der Innenseite des äußeren Anschlussabschnitts jedoch als eine formschlüssige Verbindung ausgeführt sein, bei welcher die Verbindungsabschnitte beispielsweise an einem Anschlag oder einer Stufe auf der Innenseite des äußeren Anschlussabschnitts anliegen oder in eine Rille auf der Innenseite eingreifen.

Insgesamt gestattet die Verbindungsvorrichtung somit eine Fixierung des inneren Anschlussabschnitts an dem äußeren Anschlussabschnitt bzw. eine Fixierung des Prozessanschlusses an dem Sensorgehäuse und umgekehrt in der Längsrichtung, d.h. beispielsweise in axialer Richtung entlang der gemeinsamen zentrale Achse des Prozessanschlusses und des Sensorgehäuses, und in der seitlichen Richtung, die beispielsweise von der gemeinsamen zentralen Achse radial senkrecht zu der axialen Richtung nach außen verläuft. In einer Umfangsrichtung senkrecht zur Längsrichtung und zur seitlichen Richtung sind der innere und der äußere Anschlussabschnitt jedoch nicht notwendigerweise fixiert, so dass eine drehbare Ausführung der Verbindungsvorrichtung möglich ist, bei welcher der Prozessanschluss beispielsweise um einen vordefinierten Winkel gegenüber dem Sensorgehäuse drehbar ist.

Die Verbindungsvorrichtung kann beispielsweise hohe Kräfte in Längsrichtung und seitlicher Richtung aufnehmen, wenn die Verbindung zwischen den Verbindungsabschnitten des Federelements und der Innenseite des äußeren Anschlussabschnitts formschlüssig ausgeführt ist. Ferner ist die Verbindungsvorrichtung robust gegenüber Temperaturschwankungen, da die Verbindung zwischen dem Prozessanschluss und dem Sensorgehäuse durch einen Eingriff sozusagen von innen nach außen durch die jeweilige Öffnung in dem inneren Anschlussabschnitt mittels der mindestens drei Verbindungsabschnitte herstellt wird und das Federelement zusätzlich mit der Innenseite des äußeren Anschlussabschnitts in Verbindung steht.

Da sich das Federelement teilweise innerhalb des inneren Anschlussabschnitts befindet und zum Herstellen der Verbindung nur mit der Innenseite des äußeren Anschlussabschnitts in Kontakt steht, ist das Federelement von außen nicht sichtbar, sobald die Verbindung zwischen Prozessanschluss und Sensorgehäuse hergestellt ist. Ferner umfasst die Verbindungsvorrichtung eine geringe Anzahl von Teilen und erfordert daher einen geringen Montageaufwand. Außerdem ermöglicht die Verbindungsvorrichtung bei der Montage ein sogenanntes "blindes Fügen", bei dem keine vordefinierte Ausrichtung des Prozessanschlusses gegenüber dem Sensorgehäuse erforderlich ist.

Zusätzlich sind bei der Montage der Verbindungsvorrichtung gleichzeitig ein lineares Fügen und die Herstellung einer elektrischen Kontaktierung auch mit mehreren Kontakten möglich, da die Montage des Federelements mittels einer linearen Verschiebung erfolgen kann, bis die Verbindungsabschnitte in die jeweiligen Öffnungen des inneren Anschlussabschnitts gelangen und die Verbindung mit der Innenseite des äußeren Anschlussabschnitts herstellen. Außerdem kann eine Abdichtung zwischen dem Sensorgehäuse und dem Prozessanschluss unabhängig von der mechanischen Verbindung ausgeführt werden, die mittels der Verbindungsvorrichtung hergestellt wird. Beispielsweise kann für eine solche Abdichtung ein zusätzlicher O-Ring vorgesehen sein, der unabhängig von dem Federelement zwischen dem inneren und dem äußeren Anschlussabschnitt angeordnet wird.

Gemäß einer Ausführungsform weist das Federelement zumindest ein Drehbegrenzungselement auf, welches mit zumindest einem komplementären Element, das an dem äußeren Anschlussabschnitt angeordnet ist, in Eingriff bringbar ist, um dadurch einen Winkel zu begrenzen, um den das äußere Anschlusselement relativ zu dem inneren Anschlusselement in deren Umfangsrichtung drehbar ist. Das Drehbegrenzungselement ist somit dafür vorgesehen, den Winkel festzulegen, um den der Prozessanschluss und das Sensorgehäuse gegeneinander in Umfangsrichtung verdreht werden können.

Der derart festgelegte Winkel kann insbesondere auch gleich Null sein, so dass keine Drehung zwischen dem Prozessanschluss und dem Sensorgehäuse zugelassen wird und diese somit verdrehsicher aneinander fixiert sind. Eine solche Verdrehsicherung stellt folglich einen Spezialfall der Drehbegrenzung dar, die mittels des Drehbegrenzungselements und des komplementären Elements erreicht wird.

Das Federelement kann als ringförmig gebogenes Drahtelement mit offenen Enden ausgebildet sein. Der jeweilige Verbindungsabschnitt ist bei dieser Ausführungsform als jeweiliger Verbindungsbogen ausgebildet, der sich von einem Umfang des Drahtelements nach außen erstreckt, während das Drehbegrenzungselement zumindest einen von zwei Endabschnitten des Drahtelements umfassen kann. Der Begriff Umfang des Drahtelements bezieht sich in diesem Zusammenhang auf die ringförmige Kontur des Drahtelements außerhalb der Verbindungsbögen. Das Federelement kann als ringförmig gebogenes Drahtelement ausgestaltet und insofern auf einfache Weise herstellbar sein, so dass die Verbindungsvorrichtung bei einer solchen Ausführungsform mit geringen Herstellungskosten verbunden ist. Dies gilt ebenso für die Drehbegrenzung, die durch einen der beiden Endabschnitte des Drahtelements erreicht wird.

Das komplementäre Element, das an dem äußeren Anschlussabschnitt angeordnet ist, kann mindestens einen Stift umfassen, mit dem einer der zwei Endabschnitte in Eingriff bringbar ist. Ein solcher Endabschnitt kann sich beispielsweise vom Umfang des Drahtelements in radialer Richtung nach außen erstrecken und an dem Stift als komplementäres Element anliegen. Ein solcher Endabschnitt erstreckt sich sozusagen in derselben Ebene wie das restliche Drahtelement. Es können insbesondere zwei Stifte als komplementäre Elemente an dem äußeren Anschlussabschnitt vorgesehen sein, die als Anschlag für zwei Endabschnitte des Drahtelements dienen. Mittels zweier solcher Stifte und den entsprechenden beiden Endabschnitten des Drahtelements kann ferner eine verdrehsichere Verbindung zwischen dem Prozessanschluss und dem Sensorgehäuse hergestellt werden, wenn der Abstand zwischen den beiden Stiften geeignet gewählt wird.

Alternativ oder zusätzlich kann das komplementäre Element eine Aussparung an dem äußeren Anschlusselement umfassen, mit der zumindest einer der zwei Endabschnitte des Drahtelements in Eingriff bringbar ist. Bei dieser Ausführungsform erstreckt sich zumindest einer der zwei Endabschnitte des Drahtelements zumindest teilweise in axialer Richtung, d.h. aus einer Ebene heraus, in der sich das restliche Drahtelement erstreckt. Insbesondere können sich beide Endabschnitte des Drahtelements in die Aussparung hinein erstrecken. Die Drehung des Prozessanschlusses relativ zu dem Sensorgehäuse ist bei dieser Ausführungsform dadurch begrenzt, dass zumindest einer der beiden Endabschnitte an einem jeweiligen Rand der Aussparung anliegt. Ein Rand oder eine Wand der Aussparung kann also als Anschlag für einen der Endabschnitte des Drahtelements dienen und eine weitere Drehung des Prozessanschlusses relativ zu dem Sensorgehäuse verhindern.

Generell kann ein Winkel in Umfangsrichtung, über den sich die Aussparung innerhalb des äußeren Anschlussabschnitts erstreckt, den Drehwinkel festlegen, um den der Prozessanschluss relativ zu dem Sensorgehäuse drehbar ist. Wenn ein Öffnungswinkel zwischen den zwei Endabschnitten in einem entspannten Zustand des Drahtelements gleich dem Winkel ist, über den sich die Aussparung in Umfangsrichtung erstreckt, oder etwas größer als dieser Winkel ist, kann eine verdrehsichere Verbindung zwischen dem Prozessanschluss und dem Sensorgehäuse hergestellt werden.

Darüber hinaus kann das komplementäre Element sowohl einen Stift als auch eine Aussparung an dem äußeren Anschlussabschnitt umfassen, so dass einer der zwei Endabschnitte des Drahtelements in die Aussparung eingreift und sich dabei in axialer Richtung erstreckt, während der andere der beiden Endabschnitte an dem Stift als Anschlag anliegt und sich in radialer Richtung erstreckt. Auf diese Weise kann eine sichere Drehbegrenzung zwischen dem Prozessanschluss und dem Sensorgehäuse unabhängig von deren Drehrichtung gegeneinander erreicht werden. Eine geeignete Anordnung des Stifts und der Aussparung kann nämlich dafür sorgen, dass die Kräfte, die bei einer Begrenzung der Drehung des Prozessanschlusses relativ zu dem Sensorgehäuse auftreten, in eine jeweilige Richtung wirken, welche die Verbindung zwischen den Verbindungsabschnitten des Federelements und der Innenseite des äußeren Anschlussabschnitts verstärkt und nicht abschwächt.

Als Alternative zur Ausführung als Drahtelement kann das Federelement ferner als Kunststoffteil bzw. Spritzgussteil ausgebildet sein, von dessen Umfang sich die Verbindungsabschnitte des Federelements radial nach außen erstrecken. Ein Drehbegrenzungselement kann bei dieser Ausführungsform als Vorsprung ausgebildet sein, der sich in einer axialen Richtung des Kunststoffteils erstreckt und mit einer Aussparung an dem äußeren Anschlusselement, die das komplementäre Element bildet, in Eingriff bringbar ist. Wenn das Kunststoffteil in radialer Richtung eine gewisse Ausdehnung oder Dicke aufweist, ist hier mit dem Umfang, von dem sich die Verbindungsabschnitte radial nach außen erstrecken, der Außenumfang des Kunststoffteils gemeint. Die axiale Richtung des Kunststoffteils erstreckt sich entlang einer Längsrichtung, die durch eine gemeinsame Achse des Prozessanschlusses und des Sensorgehäuses definiert ist. Die radiale Richtung, in der sich die Verbindungsabschnitte erstrecken, ist rechtwinklig zu der axialen Richtung definiert und erstreckt sich somit von der gemeinsamen Achse des Prozessanschlusses und des Sensorgehäuses nach außen.

Insbesondere ein Spritzgussteil ist einfach und kostengünstig herstellbar.

Die Verbindungsabschnitte können jeweils elastisch an dem Umfang des Kunststoffteils angeordnet sein, und zwar durch eine Verbindung über jeweilige Arme, die sich in einer Umfangsrichtung des Kunststoffteils erstrecken und eine Verbindung mit dem restlichen Kunststoffteil, d.h. sozusagen mit dessen Körper, herstellen. Zwischen den Armen, an denen sich die jeweiligen Verbindungsabschnitte befinden, und einem durchgängig umlaufenden Abschnitt oder dem Körper des Kunststoffteils kann sich ferner ein Spalt befinden, so dass eine elastische Verschiebung der Verbindungsabschnitte relativ zu dem restlichen Kunststoffteil ermöglicht wird, um die Verbindungsabschnitte bei einer Montage der Verbindungsvorrichtung vorspannen zu können. Ein derartiges Kunststoffteil kann eine kompakte Einheit bilden, die mit geringen Kosten herstellbar ist.

Mindestens einer der Verbindungsabschnitte, die sich von dem Umfang des Kunststoffteils radial nach außen erstrecken, kann in Umfangsrichtung entgegengesetzt zu einem anderen Verbindungsabschnitt ausgerichtet sein. Dadurch kann jeweils mindestens einer der Verbindungsabschnitte eine Kraft in Umfangsrichtung und in entgegengesetzter Richtung aufnehmen, d.h. in beiden möglichen Drehrichtungen des Prozessanschlusses bezogen auf das Sensorgehäuse. Dadurch können die Verbindungsabschnitte des Kunststoffteils Kräfte in diesen beiden Drehrichtungen aufnehmen und eine drehfeste Fixierung bzw. Drehbegrenzung zwischen dem Prozessanschluss und dem Sensorgehäuse unterstützen.

Gemäß einer weiteren Ausführungsform, insbesondere bei einer Ausführung als Kunststoffteil bzw. Spritzgussteil, kann das Federelement auch mindestens vier Verbindungsabschnitte aufweisen, die sich von seinem Umfang radial nach außen erstrecken. Die Verwendung von mindestens vier Verbindungsabschnitten kann die radiale und axiale Fixierung des Prozessanschlusses an dem Sensorgehäuse verstärken. Ferner können bei dieser Ausführungsform jeweils zwei Verbindungsabschnitte in Umfangsrichtung paarweise entgegengesetzt zueinander angeordnet bzw. ausgerichtet sein.

Ebenso wie bei der vorstehend beschriebenen Ausführungsform, bei der das Federelement als Drahtelement ausgebildet ist und bei der zur Drehbegrenzung ein Endabschnitt des Drahtelements in eine Aussparung eingreift, während ein zweiter Endabschnitt mit einem Stift in Kontakt gelangen kann, gestattet die Ausführungsform mit zwei in Umfangsrichtung entgegengesetzt zueinander angeordneten Verbindungsabschnitten, dass das Federelement Kräfte in beiden Drehrichtungen in Umfangsrichtung aufnehmen kann, wodurch die drehfeste Fixierung oder die Drehbegrenzung des Prozessanschlusses an dem Sensorgehäuse intensiviert wird. Außerdem kann durch die Aufnahme der Kräfte verhindert werden, dass sich die Verbindungsabschnitte in radialer Richtung nach innen bewegen und dadurch die axiale Fixierung des Prozessanschlusses an dem Sensorgehäuse beeinträchtigt oder sogar aufgehoben wird.

Gemäß einer weiteren Ausführungsform kann das Federelement als ein ringförmiges Blechteil ausgebildet sein, das in Umfangsrichtung ein Lücke aufweist. Die Verbindungsabschnitte können sich von einem Umfang des Blechteils radial nach außen erstrecken.

Die Ausführung als ringförmiges Blechteil gestattet eine kostengünstige Herstellung des Federelements. Die Lücke in Umfangsrichtung ermöglicht eine Vorspannung des ringförmigen Blechteils bei der Montage der Verbindungsvorrichtung, d.h. auf eine ähnliche Weise wie ein offener Bereich bei der Ausführung des Federelements als ringförmig gebogenes Drahtelement mit offenen Enden.

Zusätzlich kann das ringförmige Blechteil ein Drehbegrenzungselement aufweisen, welches mit zumindest einem komplementären Element, das an dem äußeren Anschlussabschnitt angeordnet ist, in Eingriff bringbar ist, um dadurch einen Winkel zu begrenzen, um den das äußere Anschlusselement relativ zu dem inneren Anschlusselement in deren Umfangsrichtung drehbar ist. Das Drehbegrenzungselement des ringförmigen Blechteils kann sich von dessen Umfang radial nach innen oder in axialer Richtung erstrecken.

Ein solches sich radial nach innen oder in axialer Richtung erstreckendes Drehbegrenzungselement kann auf ähnliche Weise mit dem komplementären Element an dem äußeren Anschlussabschnitt wechselwirken wie die offenen Enden des Drahtelements und beispielsweise an einem Stift des äußeren Anschlusselements anliegen oder in eine Aussparung des äußeren Anschlusselements eingreifen.

Darüber hinaus kann das Federelement in das Sensorgehäuse oder in den Prozessanschluss integriert sein. Ein Abschnitt des Sensorgehäuse bzw. des Prozessanschlusses kann bei dieser Ausführungsform beispielsweise auf ähnliche Art ausgebildet sein wie das vorstehend beschriebene Kunststoffteil. Wenn das Federelement in das Sensorgehäuse oder in den Prozessanschluss integriert ist und mit einem von beiden sozusagen eine Einheit bildet, verringert sich die Anzahl der Elemente der Verbindungsvorrichtung, so dass nur zwei Teile erforderlich sind, beispielsweise der innere Anschlussabschnitt mit integriertem Federelement und der äußere Anschlussabschnitt.

Weiterer Gegenstand der Erfindung ist ein Verfahren zum Verbinden eines Prozessanschlusses mit einem Sensorgehäuse. Entweder weist das Sensorgehäuse einen inneren Anschlussabschnitt auf, während der Prozessanschluss einen äußeren Anschlussabschnitt aufweist, oder es weist das Sensorgehäuse den äußeren Anschlussabschnitt auf, während der Prozessanschluss den inneren Anschlussabschnitt aufweist.

Gemäß dem Verfahren wird zunächst ein Federelement, das mindestens drei Verbindungsabschnitte aufweist, innerhalb des inneren Anschlussabschnitts angeordnet. Anschließend wird der innere Anschlussabschnitt innerhalb des äußeren Anschlussabschnitts angeordnet, beispielsweise durch eine lineare Verschiebung des inneren und äußeren Anschlussabschnitts relativ zueinander entlang einer gemeinsamen zentralen Achse, die eine axiale Richtung definiert. Der innere Anschlussabschnitt und der äußere Anschlussabschnitt werden danach in der axialen Richtung und/oder in einer Umfangsrichtung des inneren und des äußeren Anschlussabschnitts relativ zueinander verschoben, um dadurch das Federelement derart zu verschieben, dass sich die Verbindungsabschnitte des Federelements jeweils durch eine Öffnung in den inneren Anschlussabschnitt hindurch erstrecken und eine Verbindung mit einer Innenseite des äußeren Anschlussabschnitts herstellen.

Das Verfahren ist somit zur Montage der vorstehend beschriebenen Verbindungsvorrichtung vorgesehen. Daher gelten für das Verfahren die vorstehenden Ausführungen zur Verbindungsvorrichtung entsprechend. Dies gilt insbesondere hinsichtlich der Vorteile und der bevorzugten Ausführungsformen. Weiterhin versteht es sich, dass sämtliche hierin genannten Merkmale miteinander kombinierbar sind, sofern nicht explizit etwas Gegenteiliges angegeben ist.

Gemäß dem Verfahren befindet sich das Federelement zunächst in einem vorgespannten Anfangszustand innerhalb des inneren Anschlussabschnitts. Wenn der innere und der äußere Anschlussabschnitt ineinander angeordnet werden, wird das Federelement entweder in der axialen Richtung beispielsweise durch lineares Fügen ohne Drehung so lange verschoben, bis die mindestens drei Verbindungsabschnitte des Federelements jeweils durch die jeweilige Öffnung in dem inneren Anschlusselement hindurchtreten und sozusagen in diesen Öffnungen einrasten. Dadurch geht das Federelement von dem vorgespannten Zustand in einen entspannten Zustand über, und gleichzeitig wird die Verbindung zwischen den Verbindungsabschnitten und der Innenseite des äußeren Anschlussabschnitts hergestellt. Die axiale Verschiebung des Federelements kann durch Elemente wie etwa Stifte erfolgen, die beispielsweise an einer Stirnfläche des äußeren Anschlussabschnitts angeordnet sind und sich in der axialen Richtung erstrecken.

Alternativ können bei entsprechender Ausgestaltung der Elemente der verwendeten Verbindungsvorrichtung der innere und der äußere Anschlussabschnitt auch mittels Fügen unter Verwendung einer Drehung miteinander verbunden werden. Bei dieser Variante werden der innere Anschlussabschnitt, in dem das Federelement in dem vorgespannten Zustand angeordnet ist, und der äußere Anschlussabschnitt zusätzlich zu einer Bewegung in axialer Richtung in Umfangsrichtung so lange gedreht, bis die mindestens drei Verbindungsabschnitte des Federelements wiederum jeweils durch die jeweilige Öffnung in dem inneren Anschlussabschnitt hindurchtreten. Die Drehung kann so lange erfolgen, bis beispielsweise Endabschnitte des Federelements in eine entsprechende Aussparung an dem äußeren Anschlussabschnitt eingreifen und das Federelement dadurch von dem vorgespannten Anfangszustand in den entspannten Zustand übergeht, in welchem sich die Verbindungsabschnitte durch die jeweilige Öffnung in den inneren Anschlussabschnitt erstrecken und die Verbindung mit der Innenseite des äußeren Anschlussabschnitts herstellen.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: perspektivische Ansichten (Fig. 1A eine Draufsicht, Fig. 1B ein Schnitt, Fig. 1C eine Detailansicht, teilweise im Schnitt) eines Prozessanschlusses und eines Sensorgehäuses mit einer Verbindungsvorrichtung zwischen diesen,
- Fig. 2A und 2B: zwei verschiedene Ausführungen eines Federelements für die Verbindungsvorrichtung von Fig. 1,
- Fig. 3A: Schritte (Fig. 3A-1 bis 3A-4) zur Montage einer Verbindungsvorrichtung, die das Federelement von Fig. 2A umfasst,
- Fig. 3B: Schritte (Fig. 3B-1 bis 3B-4) zur Montage einer anderen Verbindungsvorrichtung, die das Federelement von Fig. 2B umfasst,
- Fig. 4A und 4B: Schnittansichten des Prozessanschlusses und des Sensorgehäuses nach der Montage des Federelements von Fig. 2A bzw. Fig. 2B (Fig. 4AA zeigt einen Ausschnitt der Fig. 4A),
- Fig. 5: Ausführungen der Verbindungsvorrichtung mit Sicherung gegen Verdrehen des Prozessanschlusses bezüglich des Sensorgehäuses (Fig. 5A-1 und 5B-1) sowie eine Ausführung der Verbindungsvorrichtung mit Drehbegrenzung (Fig. 5B-2) und eine Ausführung der Verbindungsvorrichtung gänzlich ohne Drehbegrenzung (Fig. 5A-2),
- Fig. 6: eine Veranschaulichung von Kräften, die bei einer Drehbegrenzung auf das Federelement ausgeübt werden,
- Fig. 7: eine weitere Ausführung des Federelements und dessen Anordnung in der Verbindungsvorrichtung,
- Fig. 8: eine Ausführung des Federelements als Spritzgussteil und dessen Anordnung in der Verbindungsvorrichtung,
- Fig. 9: weitere Ausführungen des Spritzgussteils,
- Fig. 10: eine weitere Ausführung des Federelements als Spritzgussteil,
- Fig. 11: eine Ausführung des Federelements als Blechteil und
- Fig. 12: ein Sensorgehäuse mit integriertem Federelement.

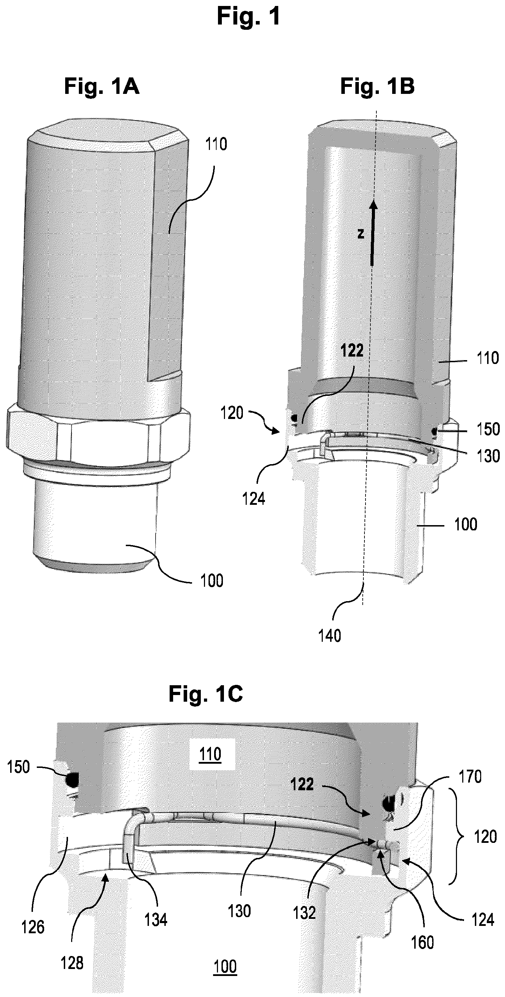

Fig. 1A zeigt schematisch eine perspektivische Ansicht einer Verbindung eines Prozessanschlusses 100 und einem Sensorgehäuse 110. Die Verbindung wird mittels einer Verbindungsvorrichtung 120 hergestellt, die schematisch in den perspektivischen Schnittansichten von Fig. 1B und Fig. 1C erkennbar ist.

Die Verbindungsvorrichtung 120 umfasst einen inneren Anschlussabschnitt 122, der an dem Sensorgehäuse 110 angeordnet ist, einen äußeren Anschlussabschnitt 124, der an dem Prozessanschluss 100 angeordnet ist, und ein Federelement 130, das teilweise innerhalb des inneren Anschlussabschnitts 122 angeordnet ist und den inneren Anschlussabschnitt 122 mit dem äußeren Anschlussabschnitt 124 verbindet, wie nachstehend im Detail erläutert ist. Der innere Anschlussabschnitt 122 umfasst denjenigen Teil des Sensorgehäuses 110, der von dem äußeren Anschlussabschnitt 124 umgeben ist. Umgekehrt umfasst der äußere Anschlussabschnitt 124 denjenigen Teil des Prozessanschlusses 100, der den inneren Anschlussabschnitt 122 umgibt.

Folglich überlagern sich der Prozessanschluss 100 und das Sensorgehäuse 110 im Bereich des inneren Anschlussabschnitts 122 und des äußeren Anschlussabschnitt 124 in einer axialen Richtung, die durch eine gemeinsame zentrale Achse 140 des Prozessanschlusses 100 und des Sensorgehäuses 110 gegeben ist. Die zentrale Achse 140 ist in Fig. 1B durch eine gestrichelte Linie veranschaulicht, während die axiale Richtung durch einen Pfeil in z-Richtung dargestellt ist. Zur Abdichtung des Prozessanschlusses 100 gegenüber dem Sensorgehäuse 110 ist ferner eine Dichtung in Form eines O-Rings 150 im Bereich der Verbindungsvorrichtung 120 zwischen dem Prozessanschluss und dem Sensorgehäuse 110 vorgesehen.

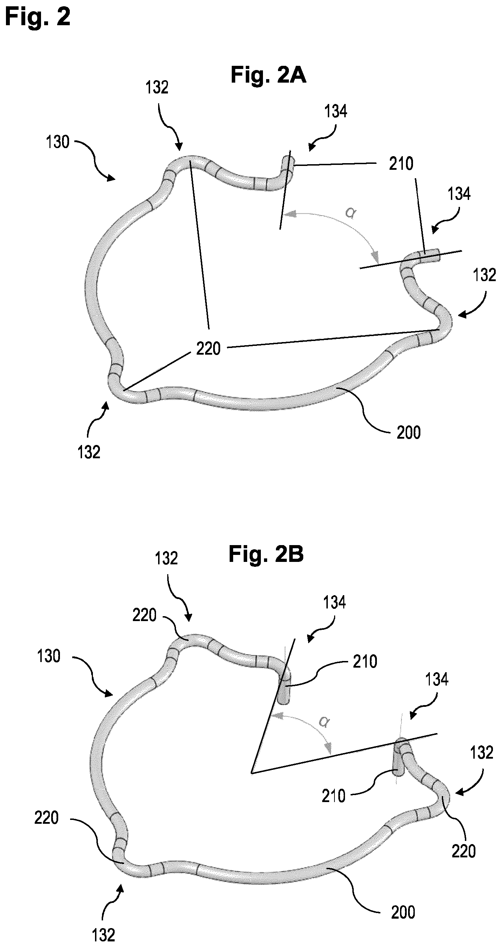

Fig. 1C zeigt eine vergrößerte perspektivische Ansicht eines Abschnitts von Fig. 1B im Bereich der Verbindungsvorrichtung 120. Man erkennt, dass sich ein Abschnitt 132 (vgl. auch Fig. 2) des Federelements 130 durch eine Öffnung 160 des inneren Anschlussabschnitts 122 hindurch erstreckt und an einer Innenseite 126 des äußeren Anschlussabschnitts 124 anliegt. Genauer gesagt liegt der Abschnitt 132 des Federelements 130, der sich durch die Öffnung 160 hindurch erstreckt, an einem Vorsprung 170 des äußeren Anschlussabschnitts 124 an. Der Abschnitt 132 wird daher als Verbindungsabschnitt bezeichnet. Mittels des Verbindungsabschnitts 132 werden der Prozessanschluss 100 und das Sensorgehäuse 110 in axialer und radialer Richtung miteinander fixiert, wie nachstehend näher erläutert ist. Ein weiterer Abschnitt des Federelements 130, der mit 134 bezeichnet ist, greift in eine Aussparung des äußeren Anschlussabschnitts 124, die mit 128 bezeichnet ist. Wie ebenfalls nachstehend näher erläutert ist, bewirkt der Abschnitt 134 des Federelements, der in die Aussparung 128 eingreift, eine

Drehbegrenzung für den Prozessanschluss 100 bezogen auf das Sensorgehäuse 110. Daher wird der Abschnitt 134 als Drehbegrenzungselement bezeichnet, während die Aussparung 128 ein zu diesem komplementäres Element für die Drehbegrenzung bildet.

In Fig. 2 sind zwei Ausführungen des Federelements 130 im Detail dargestellt. Bei beiden Ausführungen, die jeweils in Fig. 2A und Fig. 2B gezeigt sind, ist das Federelement 130 als ringförmig gebogenes Drahtelement 200 mit offenen Enden ausgebildet. Zwischen Endabschnitten 210 des Federelements 130 erstreckt sich daher ein offener Bereich über einen Winkel α.

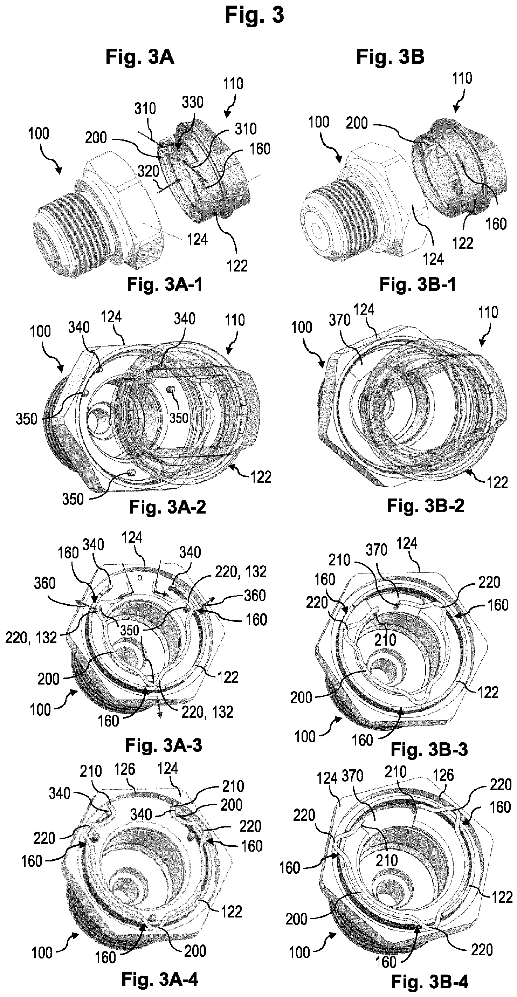

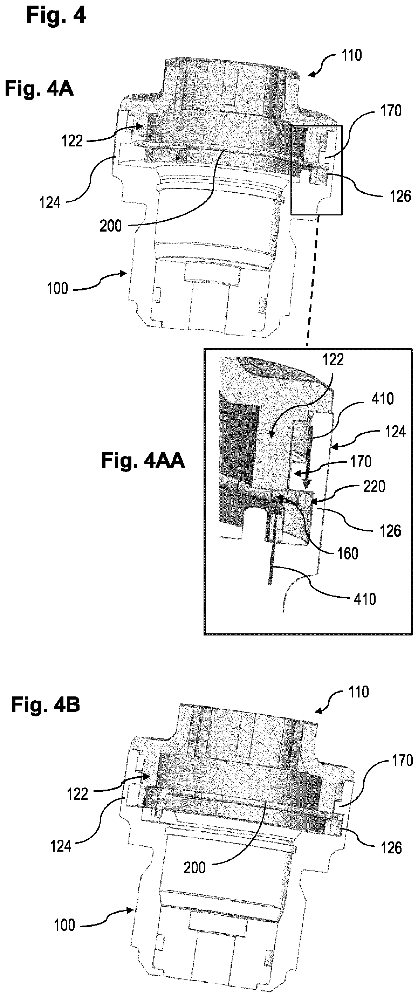

Das Federelement 130 weist ferner drei Verbindungsabschnitte 132 auf, die als jeweiliger Verbindungsbogen 220 ausgebildet sind, der sich von einem inneren Umfang des Drahtelements bzw. Federelements 130 nach außen erstreckt. Wie vorstehend bereits erwähnt wurde und nachstehend im Zusammenhang mit den Fig. 3 bis 7 weiter erläutert ist, erstrecken sich die Verbindungsabschnitte 132 nach einer Montage des Federelements 130 in der Verbindungsvorrichtung 120 jeweils durch eine jeweilige Öffnung 160 in den inneren Anschlussabschnitt 122 (vgl. Fig. 1 und 4), um mit einer Innenseite 126 des äußeren Anschlussabschnitts 124 in Verbindung zu stehen.

Die Ausführungen des Federelements 130 von Fig. 2A und Fig. 2B unterscheiden sich nur durch die Ausgestaltung der zwei Endabschnitte 210 des Drahtelements 200. Bei der Ausführung von Fig. 2A erstrecken sich die zwei Endabschnitte 210 vom Umfang des Federelements 130 radial nach außen. Somit erstrecken sich die beiden Endabschnitte 210 bei der Ausführung von Fig. 2A in derselben Ebene wie die weiteren Abschnitte des Drahtelements 200. Bei der Ausführung von Fig. 2B hingegen erstrecken sich die zwei Endabschnitte 210 rechtwinklig von den übrigen Abschnitten des Federelements, d.h. aus deren Ebene heraus. Wie in Fig. 1C zu erkennen ist, erstrecken sich die Endabschnitte 134 bei der Ausführung von Fig. 2B in der axialen Richtung parallel zur zentralen Achse 140 (vgl. Fig. 1), wenn das Federelement 130 in der Verbindungsvorrichtung 120 montiert ist.

Wie nachstehend näher erläutert ist, dienen die Endabschnitte 210 entweder zur drehfesten Sicherung des Prozessanschlusses 100 an dem Sensorgehäuse 110 oder im Zusammenhang mit weiteren Elementen zur Drehbegrenzung, wenn der Prozessanschluss 100 drehbar an dem Sensorgehäuse 110 angebracht ist. Die drehfeste Fixierung und die Drehbegrenzung werden bei den zwei Ausführungen des Drahtelements 200 auf unterschiedliche Weise mittels der Endabschnitte 210 erreicht.

In Fig. 3 sind Schritte zur Montage der Verbindungsvorrichtung 120 schematisch dargestellt, d.h. Schritte eines Verfahrens zum Verbinden des Prozessanschlusses 100 mit dem Sensorgehäuse 110. In der linken Spalte von Fig. 3A, die mit Fig. 3A bezeichnet ist, wird die Ausführung des Drahtelements 200 von Fig. 2A verwendet, und der Prozessanschluss 100 wird durch lineares Fügen ohne Drehung mit dem Sensorgehäuse 110 verbunden. Bei der rechten Spalte von Fig. 3 hingegen, die mit Fig. 3B bezeichnet ist, wird die zweite Ausführung des Drahtelements 200 von Fig. 2B verwendet, und die Verbindung des Prozessanschlusses 100 mit dem Sensorgehäuse 110 wird durch eine Verschiebung in axialer Richtung mit anschließender Drehung hergestellt.

Zuerst wird das Drahtelement 200 dadurch vorgespannt, dass es an den Endabschnitten 210 (vgl. Fig. 2) zusammengedrückt wird, wie dies in Fig. 3A-1 durch die beiden Pfeile 310 angedeutet ist. Die Pfeile 310 repräsentieren somit die Kraft zum Zusammendrücken des Drahtelements 200 bzw. zum Vorspannen des Federelements 130. Dadurch wird der offene Bereich zwischen den Endabschnitten 210 bzw. der Winkel α zwischen diesen (vgl. Fig. 2) verkleinert. Anschließend wird das Drahtelement 200 im Inneren des Sensorgehäuses 110 positioniert.

Bei der Ausführung von Fig. 3A ist das Drahtelement 200 nach dem Einfügen in den inneren Anschlussabschnitt 122 weiterhin in axialer Richtung verschiebbar. Bei der Ausführung von Fig. 3B hingegen wird das Drahtelement 200 derart in den inneren Anschlussabschnitt 122 eingefügt, dass es an einer Schulter bzw. Stufe einer Innenwand des Sensorgehäuses 110 anliegt, wie dies in Fig. 3B-1 erkennbar ist.

Anschließend werden der innere Anschlussabschnitt 122 des Sensorgehäuses 110 und der äußere Anschlussabschnitt 124 des Prozessanschlusses 100 in axialer Richtung ineinandergeschoben, wie dies durch den Pfeil 320 in Fig. 3A-1 angedeutet ist. In Fig. 3A-2 und Fig. 3A-2 ist diese axiale Verschiebung jeweils anhand einer Draufsicht auf das Innere des Prozessanschlusses 100 veranschaulicht, bei der das Sensorgehäuse 110 lediglich in Durchsicht angedeutet ist.

Bei der Ausführung von Fig. 3A weist das Sensorgehäuse 110 im oberen Bereich eine Aussparung 330 auf, deren Abmessung in Umfangsrichtung dem Winkelabstand zwischen zwei Positionierungsstiften 340 (vgl. Fig. 3A-2) an einer Stirnseite des äußeren Anschlussabschnitts 124 des Prozessanschlusses 100 entspricht. Der Eingriff der Positionierungsstifte 340 in die Aussparung 330 sorgt dafür, dass der Prozessanschluss 100 und das Sensorgehäuse 110 bei der Ausführung von Fig. 3A nur linear in axialer Richtung ineinandergefügt werden können, d.h. ohne Drehung. Dies ermöglicht, zusätzlich auf einfache Weise einen elektrischen Kontakt (nicht dargestellt) zwischen dem Prozessanschluss 100 und dem Sensorgehäuse 110 herzustellen, falls ein solcher elektrischer Kontakt für eine Messung einer Prozessgröße eines Mediums mittels eines Sensors erforderlich sein sollte, der sich in dem Sensorgehäuse 110 befindet.

Der Prozessanschluss 100 und das Sensorgehäuse 110 werden so lange in axialer Richtung bei beiden Ausführungen von Fig. 3A und 3B ineinandergeschoben, bis der innere Anschlussabschnitt 122 des Sensorgehäuses 110 an einer Stirnseite des äußeren Anschlussabschnitts 124 des Prozessanschlusses 100 anliegt. Fig. 3A-3 und Fig. 3B-3 zeigen jeweils einen Zustand des Drahtelements 200, bei dem sich dieses weiterhin in dem vorgespannten Zustand befindet, in welchem der offene Bereich bzw. der Winkel α (vgl. Fig. 2) zwischen den Endabschnitten 210 des Drahtelements 200 im Vergleich zu einem entspannten Zustand des Drahtelements 200 verkleinert ist. In Fig. 3A-3, 3B-3 sowie auch in Fig. 3A-4, 3B-4 ist nur der äußerste Teil des inneren Anschlussabschnitts 122 bzw. des Sensorgehäuses 110 dargestellt, d.h. der äußerste Teil ab einem Schnitt durch die Öffnungen 160 in dem inneren Anschlussabschnitt 122.

In dem in Fig. 3A-3 dargestellten Zustand ist der innere Anschlussabschnitt 122 des Sensorgehäuses 110 so weit in Richtung der Stirnfläche des Prozessanschlusses 100 verschoben, dass das Drahtelement 200 an Verschiebungsstiften 350 anliegt, die an der Stirnseite des äußeren Anschlussabschnitts 124 des Prozessanschlusses 100 angeordnet sind. Eine weitere Verschiebung des Prozessanschlusses 100 in axialer Richtung bewirkt, dass die Verschiebungsstifte 350 das Federelement 130 innerhalb des inneren Anschlussabschnitts 122 verschieben, und zwar entgegengesetzt zur Verschiebungsrichtung des inneren Anschlussabschnitts 122.

Dadurch gelangen die Verbindungsbögen 220 des Drahtelements 200 bzw. die Verbindungsabschnitte 132 des Federelements 130 jeweils in eine jeweilige Öffnung 160 in dem inneren Anschlussabschnitt 122 des Sensorgehäuses 110. Die Bewegung der Verbindungsabschnitte 132 bzw. Verbindungsbögen 220 in die jeweilige Öffnung 160 des inneren Anschlussabschnitts 122 hinein ist in Fig. 3A-3 durch die Pfeile 360 angedeutet. Durch diese Bewegung der Verbindungsbögen 220 entspannt sich das Drahtelement 200 derart, dass sich der offene Bereich zwischen den Endabschnitten 210 bzw. der Öffnungswinkel α wieder vergrößert.

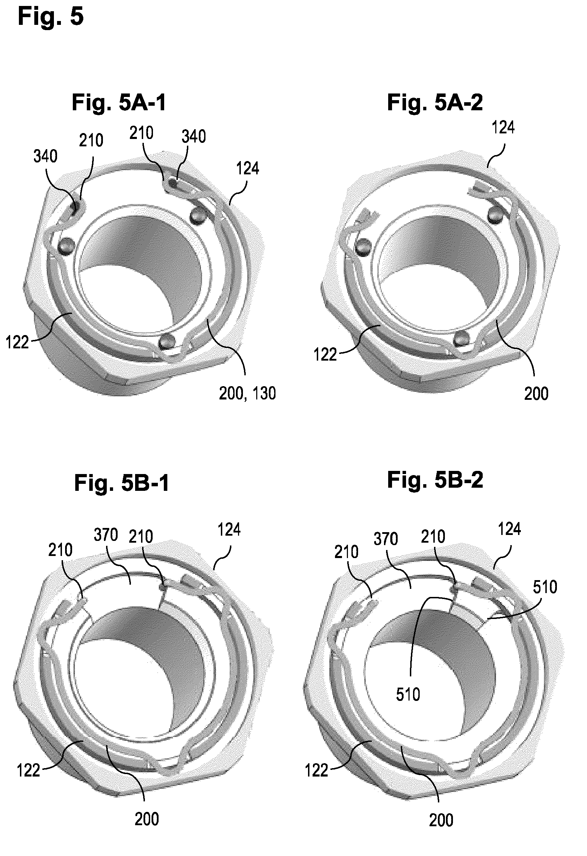

Fig. 3A-4 zeigt den erneut entspannten Zustand des Drahtelements 200, nachdem die Verbindungsbögen 220 in der jeweiligen Öffnung 160 des inneren Anschlussabschnitts 122 positioniert sind. In diesem Zustand liegen die Verbindungsbögen 220 jeweils an einer Innenseite bzw. Innenwand 126 des äußeren Anschlussabschnitts 124 des Prozessanschlusses 100 an. Gleichzeitig liegen die beiden Endabschnitte 210 des Drahtelements 210 an den Positionierungsstiften 340 an. Die Positionierungsstifte 340 bewirken bei der vorliegenden Ausführungsform zusammen mit den Endabschnitten 210 des Drahtelements 200 eine solche Drehbegrenzung für den Prozessanschluss 100 bezogen auf das Sensorgehäuse 110, dass keine Drehung möglich ist. Mit anderen Worten bewirkt das Anliegen der Endabschnitte 210 an den Positionierungsstiften 340 eine drehfeste Sicherung des Prozessanschlusses 100 an dem Sensorgehäuse 110. Ausführungsformen mit Drehbegrenzung, bei der ein Drehwinkel größer als Null zwischen dem Prozessanschluss 100 und dem Sensorgehäuse 110 zugelassen wird, ist in den Ausführungsformen von Fig. 5 bis 7 dargestellt und nachstehend beschrieben.

Wie in Fig. 3B-3 dargestellt ist, werden der innere und der äußere Anschlussabschnitt 122, 124 bei der Ausführung von Fig. 3B so lange in axialer Richtung relativ zueinander verschoben, bis die Endabschnitte 210 des Drahtelements 200 in eine Aussparung 370 an der Stirnseite des äußeren Anschlussabschnitts 124 des Prozessanschlusses 100 eingreifen. Das Federelement 130 befindet sich in Fig. 3B-3 jedoch weiterhin in einem gespannten Zustand, da die Verbindungsbögen 220 weiterhin an der Innenwand des inneren Anschlussabschnitts 122 des Sensorgehäuses 110 anliegen und sich noch nicht durch die Öffnungen 160 des inneren Anschlussabschnitts 122 hindurch erstrecken.

Anschließend erfolgt eine Drehung des Prozessanschlusses 100 um die gemeinsame zentrale Achse 140 (vgl. Fig. 1B) bezogen auf das Sensorgehäuse 110. Dadurch gelangen die Verbindungsbögen 220 jeweils in eine jeweilige Öffnung 160 des inneren Anschlussabschnitts 122 des Sensorgehäuses 110, wie dies in Fig. 3B-4 dargestellt ist. Durch die Bewegung der Verbindungsbögen 220 entspannt sich das Drahtelement 200, bis die Endabschnitte 210 des Drahtelements 200 an jeweiligen Rändern der Aussparung 370 anliegen. Dadurch vergrößert sich wiederum der offene Bereich bzw. der Winkel α zwischen den Endabschnitten 210. Gleichzeitig gelangen die Verbindungsbögen 220 des Drahtelements 200 mit der Innenseite 126 des äußeren Anschlussabschnitts 124 des Prozessanschlusses 100 in Kontakt.

Der Eingriff der Endabschnitte 210 des Drahtelements 200 mit der Aussparung 370 bewirkt bei der in Fig. 3B-4 dargestellten Ausführung wiederum eine drehfeste Sicherung des Prozessanschlusses 100 an dem Sensorgehäuse 110. Weitere Ausführungen, bei denen eine Drehung des Prozessanschlusses 100 bezogen auf das Sensorgehäuse 110 um einen vordefinierten Winkel mit Drehbegrenzung möglich ist, sind in Fig. 5 bis 7 dargestellt und nachstehend beschrieben.

In dem jeweiligen Zustand, der in Fig. 3A-4 und Fig. 3B-4 dargestellt ist, sind der innere Anschlussabschnitt 122 des Sensorgehäuses 110 und der äußere Anschlussabschnitt 124 des Prozessanschlusses 100 in radialer Richtung miteinander fixiert, da sich die drei Verbindungsabschnitte 132 bzw. Verbindungsbögen 220 des Drahtelements 200 einerseits jeweils durch eine jeweilige Öffnung 160 in dem inneren Anschlussabschnitt 122 erstrecken und andererseits an der Innenseite 126 des äußeren Anschlussabschnitts 124 anliegen. Die zylinderförmige Außenkontur des inneren Anschlussabschnitts 122 ist jeweils mit der ebenfalls zylinderförmigen Innenseite 126 des äußeren Anschlussabschnitts 124 konzentrisch ausgerichtet.

Fig. 4A ist eine Schnittansicht des Prozessanschlusses 100 und des Sensorgehäuses 110 in dem Zustand von Fig. 3A-4 nach der Montage mit entspanntem Drahtelement 200. Ebenso zeigt Fig. 4B eine Schnittansicht des Prozessanschlusses 100 und des Sensorgehäuses 110 nach der Montage der zweiten Ausführung des Drahtelements 200 (vgl. Fig. 2B), so dass Fig. 4B den Zustand von Fig. 3B-4 mit entspanntem Drahtelement 200 gemäß der zweiten Ausführung darstellt.

Wie in Fig. 4A, in deren vergrößertem Ausschnitt gemäß Fig. 4AA und in Fig. 4B zu erkennen ist, sind der innere Anschlussabschnitt 122 des Sensorgehäuses 110 und der äußere Anschlussabschnitt 124 des Prozessanschlusses 100 im montierten Zustand von Fig. 3A-4 bzw. Fig. 3B-4 zusätzlich in axialer Richtung miteinander fixiert, d.h. in der Richtung entlang der gemeinsamen zentralen Achse 140 des Prozessanschlusses 100 und des Sensorgehäuses 110 (vgl. Fig. 1B), da der jeweilige Verbindungsbogen 220 des Drahtelements 200 nicht nur an der Innenseite bzw. Innenwand 126 des äußeren Anschlussabschnitts 124 anliegt, sondern zusätzlich auch an dem Vorsprung 170 an der Innenseite des äußeren Anschlusselements 124.

Wie in der Detailansicht gemäß Fig. 4AA erkennbar ist, ist das Drahtelement 200 in dem montierten Zustand in der Lage, sämtliche Kräfte in der axialen Richtung aufzunehmen, d.h. in positiver und negativer z-Richtung (vgl. Fig. 1B), da die Verbindungsbögen 220 des Drahtelements 200 einerseits durch die jeweiligen Öffnungen 160 in dem inneren Anschlussabschnitt 122 des Sensorgehäuses 110 hindurchtreten und andererseits an dem Vorsprung 170 an der Innenseite 126 des äußeren Anschlusselements 124 des Prozessanschlusses 100 anliegen. Insgesamt sind der Prozessanschluss 100 und das Sensorgehäuse 110 somit nach der Montage des Drahtelements 200 bzw. Federelements 130 sowohl in axialer Richtung als auch in radialer Richtung miteinander fixiert. Wie man es am besten in den Darstellungen von Fig. 3A-4 und Fig. 3B-4 erkennen kann, sind für die sichere Fixierung in radialer Richtung die mindestens drei Verbindungsabschnitte bzw. Verbindungsbögen 220 notwendig, da bei nur einem Verbindungsbogen 220 oder nur zwei Verbindungsbögen 220 weiterhin eine Versetzung des inneren Anschlussabschnitts 122 gegenüber dem äußeren Anschlussabschnitt 124 möglich wäre.

Fig. 5A-1 und Fig. 5B-1 zeigen jeweils wiederum eine Draufsicht auf die Stirnfläche des äußeren Anschlussabschnitts 124 des Prozessanschlusses 100 mit montiertem Federelement 130 bzw. Drahtelement 200, d.h. auf die gleiche Weise wie Fig. 3A-4 und Fig. 3B-4. Da die beiden Endabschnitte 210 des Drahtelements 200 bzw. Federelements 130 entweder an den Positionierungsstiften 340 anliegen (vgl. Fig. 5A-1) oder in die Aussparung 370 eingreifen und dabei an deren Rändern anliegen (vgl. Fig. 5B-1), ist der Prozessanschluss 100 bei diesen Ausführungsformen gegenüber einer Verdrehung relativ zu dem Sensorgehäuse 110 gesichert.

Im Gegensatz dazu zeigt Fig. 5A-2 eine Ausführungsform, bei der die Positionierungsstifte 340 des Prozessanschlusses 100 und die Endabschnitte 210 des Drahtelements 200 fehlen. Daher ist der Prozessanschluss 100 bei der Ausführungsform vonFig. 5A-2 gegenüber dem Sensorgehäuse 110 ohne Drehbegrenzung in Umfangsrichtung drehbar.

Ferner zeigt Fig. 5B-2 eine Ausführungsform des Prozessanschlusses 100, bei der die Aussparung 370 im Gegensatz zu der Ausführungsform von Fig. 5B-1 in Umfangsrichtung erheblich erweitert ist und sich über einen Winkel von mehr als 270° erstreckt. Dadurch ist eine Drehung des Prozessanschlusses 100 gegenüber dem Sensorgehäuse 110 über einen Winkel von etwa 270° möglich, da die Endabschnitte 210 des Drahtelements 200 in Umfangsrichtung verschoben werden können. Ränder bzw. Wände 510 der Aussparung 370 wirken jedoch als Drehbegrenzung, sobald einer der Endabschnitte 210 jeweils an einem der Ränder 510 in Umfangsrichtung anliegt.

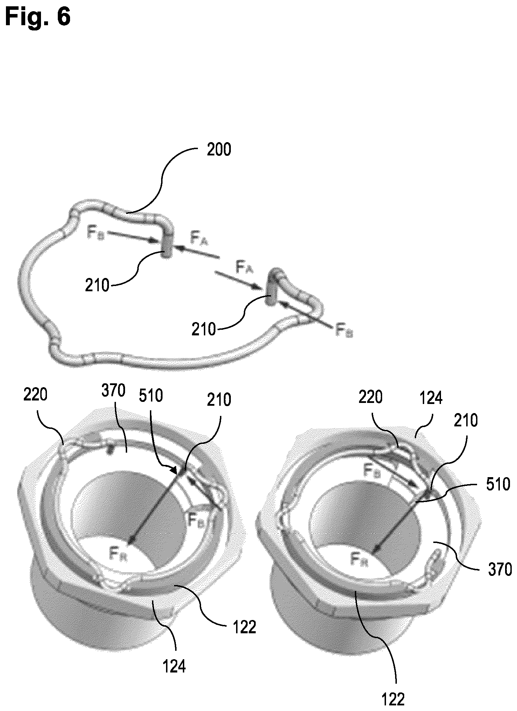

Fig. 6 veranschaulicht die Kräfte, die auf das Drahtelement 200 ausgeübt werden, wenn dessen Endabschnitte 210 in der Ausführungsform von Fig. 5B-2 in die Aussparung 370 des äußeren Anschlussabschnitts 124 des Prozessanschlusses 100 eingreifen und als Drehbegrenzung wirken. In beiden Drehrichtungen, die jeweils auf der linken und der rechten Seite in der unteren Darstellung von Fig. 6 gezeigt sind, liegt jeweils einer der Endabschnitte 210 an einem Rand 510 der Aussparung 370 an und verhindert so eine weitere Drehung des Prozessanschlusses 100 in der jeweiligen Drehrichtung gegenüber dem Sensorgehäuse 110. Dadurch wird jeweils eine Kraft F_{B} auf den Endabschnitt 210 und das gesamte Drahtelement 200. Das Drahtelement 200 wird durch die Kraft F_{B} gespannt, und bei großen Kräften bzw. hohen Drehmomenten in der jeweiligen Drehrichtung kann der jeweilige Endabschnitt 210 jeweils an dem Rand der Aussparung 370 in radialer Richtung nach innen gleiten. Dies ist durch die insofern wirkende Kraft F_{R} jeweils in der unteren Darstellung von Fig. 6 veranschaulicht. Im Extremfall kann das Drahtelement 200 durch die Einwirkung der Kräfte F_{B} und F_{R} derart gespannt werden, dass die Endabschnitte 210 aus der Aussparung 370 herausgleiten und die Verbindungsbögen 220 zum Beispiel in radialer Richtung nach innen aus der jeweiligen Öffnung 160 in dem inneren Anschlussabschnitt 122 des Sensorgehäuses 110 heraustreten. Folglich kann sich die Verbindung zwischen dem Prozessanschluss 100 und dem Sensorgehäuse 110 aufgrund der Kräfte F_{B} und F_{R} lösen.

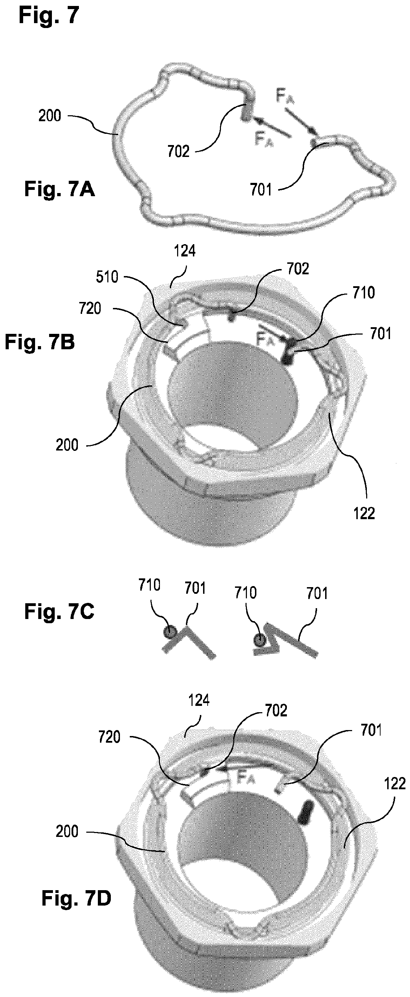

Wie man in der oberen Darstellung von Fig. 6 erkennen kann, kann es insofern vorteilhafter sein, wenn bei der Drehbegrenzung durch die Endabschnitte 134 keine Kräfte F_{B} wirken, die das Federelement 130 spannen, sondern jeweilige Kräfte F_{A} in der entgegengesetzten Richtung, die das Federelement 130 aufweiten und in der montierten Position stabilisieren. Fig. 7 zeigt daher eine weitere Ausführungsform des Drahtelements 200, die eine Kombination der in Fig. 2 dargestellten Ausführungsformen darstellt, bei der sich ein erster Endabschnitt 701 in radialer Richtung und eine zweiter Endabschnitt 702 in axialer Richtung erstreckt (vgl. Fig. 7A). Zudem erstreckt sich der erste der beiden Endabschnitte 215 in radialer Richtung nach innen und nicht nach außen wie bei der Ausführungsform von Fig. 2A.

Dieser Endabschnitt 210, der sich radial nach innen erstreckt, d.h. in derselben Ebene wie die sich anschließenden Abschnitte des Drahtelements 200, wirkt dadurch als Drehbegrenzung, dass er in einer der beiden Drehrichtungen an einem Positionsstift 710 anliegt, der sich von der Stirnfläche des Anschlussabschnitts 124 in axialer Richtung erstreckt, wie dies in Fig. 7B zu erkennen ist. Wenn der Endabschnitt 210 in der Drehposition von Fig. 7B gegen den Positionierungsstift 710 drückt und als Drehbegrenzung wirkt, wirkt umgekehrt eine Kraft F_{A} auf das Federelement 130, die dafür sorgt, dass die Verbindungsbögen 220 weiter in die jeweilige Öffnung 160 in den inneren Anschlussabschnitt 122 hineingedrückt werden.

Ferner kann in der Drehposition von Fig. 7B eine zusätzliche Sicherung in radialer Richtung dadurch erreicht werden, dass sich der Endabschnitt 210 nicht nur in radialer Richtung nach innen erstreckt, wie dies in der linken Darstellung von Fig. 7C gezeigt ist. Stattdessen kann der Endabschnitt 210 eine abgewinkelte Form aufweisen, die den Positionierungsstift 710 teilweise umgibt, wie dies in der rechten Darstellung von Fig. 7C gezeigt ist.

In Fig. 7D ist eine Drehposition dargestellt, in welcher der zweite Endabschnitt 215, der sich in der axialen Richtung von dem Drahtelement 200 weg erstreckt, in der entgegengesetzten Drehrichtung als Drehbegrenzung wirkt. In dieser Drehposition schlägt der zweite Endabschnitt 210 derart an dem Rand 510 der Aussparung 370 an, dass eine Kraft F_{A} auf das Drahtelement 200 wirkt. Diese Kraft bewirkt wiederum, dass die jeweiligen Verbindungsbögen 220 in die jeweilige Öffnung 160 des inneren Anschlussabschnitts 122 hinein und nicht aus dieser Öffnung 160 herausgedrückt werden. Zusätzlich ist die Aussparung 370 in der Stirnfläche des äußeren Anschlussabschnitts 124 mit einer Fräskontur 720 versehen, die sozusagen als Rille zur Führung des Endabschnitts 210 wirkt. Die Fräskontur 720 bewirkt eine zusätzliche Sicherung des Endabschnitts 210 gegenüber einem Weggleiten in der radialen Richtung aufgrund einer radialen Kraft F_{R} (vgl. Fig. 6).

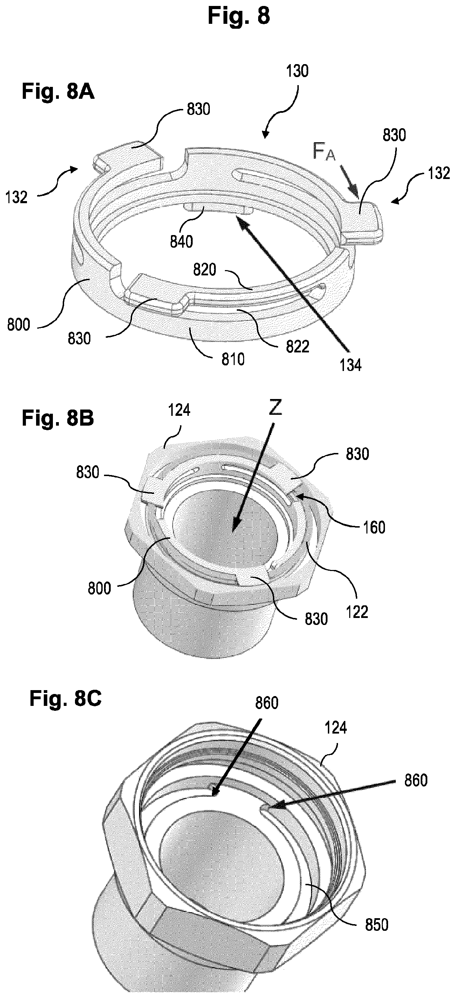

Fig. 8A zeigt eine weitere Ausführungsform des Federelements 130, bei der dieses als Spritzgussteil 800 aus Kunststoff ausgebildet ist. Das Spritzgussteil 800 umfasst einen in Umfangsrichtung durchgängig umlaufenden Ring 810, von dem sich Arme 820 zunächst in axialer Richtung und anschließend in Umfangsrichtung erstrecken. Zwischen dem Abschnitt des jeweiligen Arms 820, der sich in Umfangsrichtung erstreckt, und dem umlaufenden Ring 810 ist jeweils eine Lücke 822 gebildet. Von den Armen 820 erstreckt sich jeweils ein Verbindungsabschnitt 132 in der Form eines Vorsprungs 830 radial nach außen. Die radialen Vorsprünge 830 entsprechen somit den Verbindungsbögen 220 der Drahtelemente 220 von Fig. 2, d.h. sie weisen als Verbindungsabschnitte 132 die gleiche Funktionalität auf.

Die Montage des Spritzgussteils 800 als Federelement 130 verfolgt auf ähnliche Weise, wie dies in Fig. 3B dargestellt ist, d.h. durch Einfügen des Federelements 130 bzw. Spritzgussteils 800 in den inneren Anschlussabschnitt 122 des Sensorgehäuses 110, d.h. auf dessen Innenseite, und durch eine anschließende axiale Verschiebung und Drehung des äußeren Anschlussabschnitts 124 des Prozessanschlusses 100 bezogen auf den inneren Anschlussabschnitt 122 des Sensorgehäuses 110.

Das Spritzgussteil 800 lässt sich in den inneren Anschlussabschnitt 122 einfügen, da die radialen Vorsprünge 830 über die Arme 820 elastisch an dem umlaufenden Ring 810 des Spritzgussteils 800 angebracht sind. Das Spritzgussteil 800 kann folglich dadurch innerhalb des inneren Anschlussabschnitts 122 vorgespannt werden, dass die Verbindungsabschnitte 830 elastisch radial nach innen bewegt werden, bis sich diese innerhalb des Außenumfangs des umlaufenden Rings 810 befinden und in den inneren Anschlussabschnitt 122 eingefügt werden können.

Durch die anschließende axiale Verschiebung und Drehung des Spritzgussteils 800 gelangen die radialen Vorsprünge 830 jeweils in eine jeweilige Öffnung 160 in dem inneren Anschlussabschnitt 122 des Sensorgehäuses 110, d.h. auf ähnliche Weise, wie dies für die Verbindungsbögen 220 in Fig. 3B-3 und Fig. 3B-4 gezeigt ist. Die radialen Vorsprünge 830 erstrecken sich dann derart durch die jeweilige Öffnung 160 in dem inneren Anschlussabschnitt 122 hindurch, dass sie mit der Innenseite bzw. Innenwand 126 des äußeren Anschlussabschnitts 124 in Verbindung stehen, wie dies in Fig. 8B gezeigt ist. In Fig. 8B ist zusätzlich die axiale Richtung, in der das Spritzgussteil 800 zusammen mit dem inneren Anschlussabschnitt 122 verschoben wird, als z-Achse veranschaulicht.

In der axialen Richtung liegen die Verbindungsabschnitte 830 nach der Montage des Spritzgusselements 800 ebenso an dem Vorsprung 170 des äußeren Anschlussabschnitts 124 an, wie dies in Fig. 4 für die Verbindungsbögen 220 gezeigt ist. Dadurch erfolgt wiederum eine Fixierung des Prozessanschlusses 100 an dem Sensorgehäuse 110 in axialer Richtung.

Zusätzlich weist das Spritzgussteil 800 an dem unteren Rand des umlaufenden Rings 810 einen Vorsprung 840 auf, der sich in axialer Richtung von dem umlaufenden Ring 810 erstreckt. Nach der Montage des Spritzgussteils 800 greift der Vorsprung 840 in eine Aussparung 850 ein, die in Fig. 8C dargestellt und in der Stirnseite des äußeren Anschlussabschnitts 124 gebildet ist. Die Aussparung 850 ist in Umfangsrichtung durch Ränder 860 begrenzt, die in einer jeweiligen Drehrichtung einen Anschlag für den Vorsprung 840 des Spritzgussteils 800 bilden. Der Vorsprung 840 des Spritzgussteils 800 bildet somit zusammen mit den Rändern 860 der Aussparung 850 des äußeren Anschlussabschnitts 124 ein Drehbegrenzungselement 134 für eine Drehung des Prozessanschlusses 100 bezogen auf das Sensorgehäuse 100.

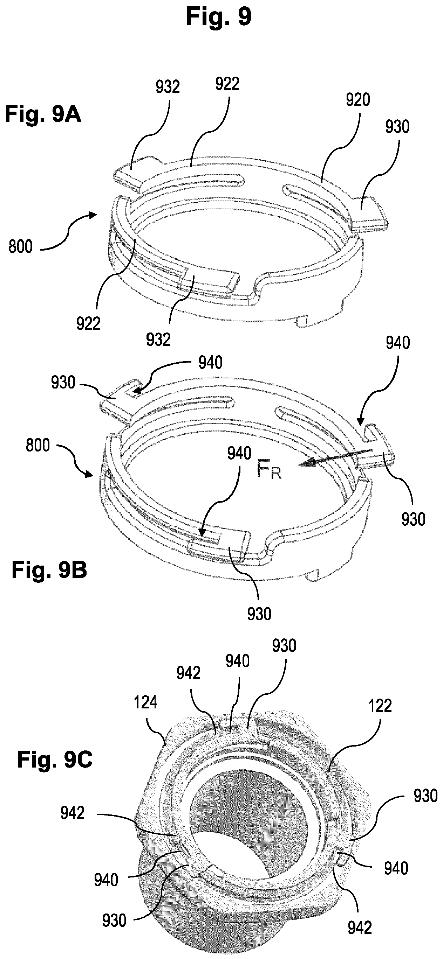

Bei der Ausführung des Federelements 130 als Spritzgussteil 800 hat sich ebenfalls gezeigt, dass die Drehbegrenzung nur dann sicher wirkt, wenn eine Kraft F_{A} in derjenigen Richtung auf die radialen Vorsprünge 830 wirkt, wie diese in Fig. 8A dargestellt ist. Bei der Ausführungsform von Fig. 8A besteht eine sichere Drehbegrenzung folglich nur in einer Drehrichtung. Daher sind bei der Ausführungsform des Spritzgussteils 800, die in Fig. 9A dargestellt ist, zwei Verbindungsabschnitte 930, 932 in Umfangsrichtung entgegengesetzt zueinander ausgerichtet.

Dies bedeutet, dass sich die jeweiligen Arme 920, 922, an denen diese Verbindungsabschnitte 930, 932 jeweils angebracht sind, in Umfangsrichtung entgegengesetzt erstrecken. In Fig. 9A erstreckt sich konkret der Arm 920 des Verbindungsabschnitts 930 in Umfangsrichtung im Uhrzeigersinn, wenn das Spritzgussteil 800 von oben betrachtet wird. Im Gegensatz dazu erstrecken sich die Arme 922, die den beiden weiteren Verbindungsabschnitten 932 zugeordnet sind, in Umfangsrichtung entgegengesetzt zum Uhrzeigersinn. Bei der Ausführungsform von Fig. 9A wird folglich unabhängig von der Drehrichtung des Prozessanschlusses 110 bezogen auf das Sensorgehäuse 100 bei einer Drehung des Prozessanschlusses 100 stets eine Kraft F_{A} in der für die Drehbegrenzung vorteilhaften Richtung auf das Spritzgussteil 800 ausgeübt.

Um eine zusätzliche Sicherung in radialer Richtung zu erreichen, weisen die Verbindungsabschnitte 930 des Spritzgussteils 800 bei einer weiteren Ausführungsform zusätzlich Aussparungen 940 auf, die sich in Umfangsrichtung erstrecken und in Fig. 9B dargestellt sind. Nach der Montage des Spritzgussteils 800 als Federelement 130 in der Verbindungsvorrichtung 120 stehen die Aussparungen 940 mit einem entsprechenden Teilabschnitt 942 (vgl. Fig. 9C) des jeweiligen inneren Anschlussabschnitts 122 in Eingriff, sobald der innere Anschlussabschnitt 122 in seine endgültige Position gedreht ist. Dadurch wird ein Herausgleiten des jeweiligen Verbindungsabschnitts 830 aus der jeweiligen Öffnung 160 in radialer Richtung verhindert.

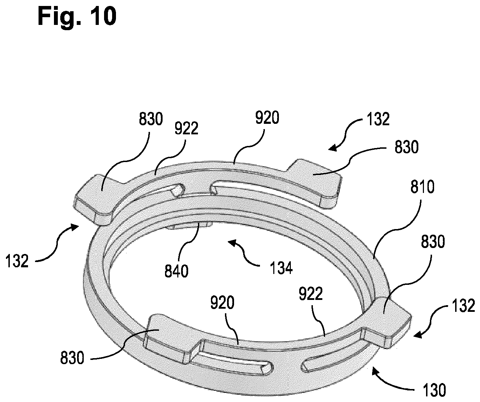

Fig. 10 zeigt eine weitere Ausführungsform des Spritzgussteils 800, bei der vier radiale Vorsprünge 830 vorgesehen sind. Jeweils zwei dieser radialen Vorsprünge 830 sind bei dieser Ausführungsform in Umfangsrichtung entgegengesetzt zueinander ausgerichtet. Das heißt, dass sich jeweils zwei Arme 920 in Umfangsrichtung im Uhrzeigersinn erstrecken, während sich zwei weitere Arme 922 gegen den Uhrzeigersinn erstrecken. Aufgrund des zusätzlichen vierten Vorsprungs 830 bzw. Verbindungsabschnitts 132 ist bei dieser Ausführungsform die Verbindung zwischen dem Prozessanschluss 100 und dem Sensorgehäuse 110 in axialer Richtung zusätzlich gesichert. Außerdem erfahren bei dieser Ausführungsform jeweils zwei radiale Vorsprünge 830 unabhängig von der Drehrichtung eine Kraft F_{A} (vgl. Fig. 6 und 8) in der derjenigen Richtung, die für eine sichere Drehbegrenzung sorgt.

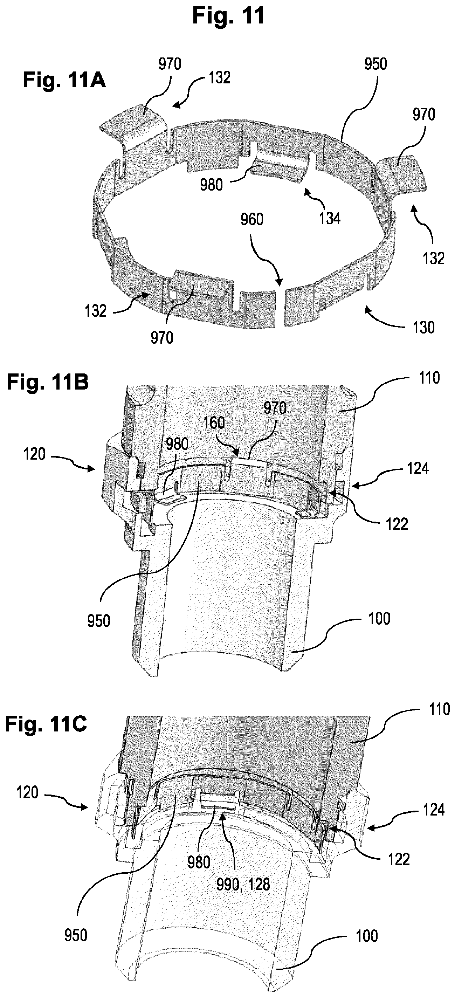

In Fig. 11 ist eine weitere Ausführungsform des Federelements 130 gezeigt, bei der dieses als ringförmiges Blechteil 950 ausgebildet ist. In Fig. 11A ist das ringförmige Blechteil 950 vor der Montage in der Verbindungsvorrichtung 120 dargestellt. Fig. 11B und Fig. 11C zeigen das ringförmige Blechteil 950 hingegen jeweils nach der Montage in der Verbindungsvorrichtung 120 in perspektivischen Schnittansichten unter verschiedenen Blickwinkeln. In axialer Richtung ist das ringförmige Blechteil 950 dann zwischen dem Prozessanschluss 100 und dem Sensorgehäuse 110 angeordnet, um eine Verbindung zwischen diesen herzustellen.

Das ringförmige Blechteil 950 weist Vorsprünge 970, 980 auf, die sich jeweils in radialer Richtung erstrecken. Die radialen Vorsprünge 970 erstrecken sich nach außen und wirken daher als jeweiliger Verbindungsabschnitt 132, während sich die radialen Vorsprünge 980 nach innen erstrecken und jeweils als Drehbegrenzungselement 134 wirken.

In Umfangsrichtung weist das ringförmige Blechteil 950 eine Lücke 960 auf, damit das Blechteil auf ähnliche Weise wie das in Fig. 2 gezeigte Drahtelement 200 in Umfangsrichtung vorgespannt und in den inneren Anschlussabschnitt 122 eingefügt werden kann. Anschließend erfolgt die Montage des ringförmigen Blechteils 950 in der Verbindungsvorrichtung 120 auf ähnliche Weise, wie dies in Fig. 3B dargestellt und vorstehend beschrieben ist.

Nach einer axialen Verschiebung und Drehung des inneren Anschlussabschnitts 122 erstrecken sich die radialen Vorsprünge 970 des Blechteils 950 jeweils durch eine jeweilige Öffnung 160 in dem inneren Anschlussabschnitt 122 nach außen, wie dies in Fig. 11B zu erkennen ist. Dadurch erfolgt eine radiale und axiale Sicherung des Prozessanschlusses 100 an dem Sensorgehäuse 110, wie dies vorstehend in Zusammenhang mit Fig. 4 beschrieben ist.

In der perspektivischen Schnittansicht von Fig. 11C sind der Prozessanschluss 100, das Sensorgehäuse 110 und das Blechteil 950 bezogen auf die Ansicht von Fig. 11B um etwa 45° nach rechts gedreht, um die Drehbegrenzung mittels der radialen Vorsprünge 980 zu veranschaulichen. Ferner ist der Prozessanschluss 100 in Fig. 11C transparent dargestellt.

Nach der Montage des Blechteils 950 als Federelement 130 in der Verbindungsvorrichtung 120 stehen die radialen Vorsprünge 980 mit einer entsprechenden radialen Aussparung 990 an einer Außenfläche des äußeren Anschlussabschnitts 124 in Eingriff. Die radiale Aussparung 990 ist in der transparenten Darstellung des Prozessanschlusses 100 nur durch dünne Linien angedeutet. Die radialen Vorsprünge 980 bilden durch den jeweiligen Eingriff mit der jeweiligen radialen Aussparung 990 ein Drehbegrenzungselement 134 für eine Drehung des Prozessanschlusses 100 bezogen auf das Sensorgehäuse 110. Die radiale Aussparung 990 bildet folglich jeweils das komplementäre Element 128 für die Drehbegrenzung.

Alternativ oder zusätzlich kann das ringförmige Blechteil 950 zur Drehbegrenzung auch einen oder mehrere nicht dargestellte Vorsprünge aufweisen, die sich in axialer Richtung erstrecken und jeweils in eine oder mehrere entsprechende axiale Aussparungen an einer Stirnseite des äußeren Anschlussabschnitts 124 eingreifen. Diese axialen Aussparungen können auf ähnliche Weise gebildet sein wie die Aussparungen 370 bzw. 850, die in Fig. 5B-1 und 5B-2 bzw. in Fig. 8C dargestellt sind.

Darüber hinaus kann das ringförmige Blechteil 950 alternativ nur die sich radial nach außen erstreckenden Vorsprünge 980 aufweisen und ohne die sich radial nach innen oder axial erstreckenden Vorsprünge 970 gebildet sein. Bei einer solchen Ausführungsform weist das Verbindungselement 120 folglich keine Drehbegrenzung auf.

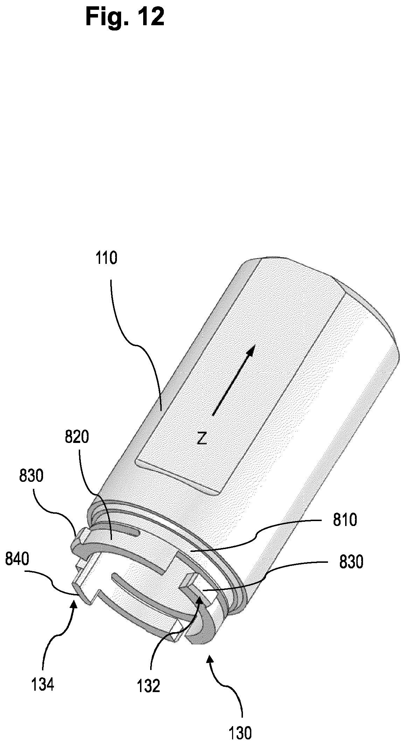

Fig. 12 zeigt eine weitere Ausführungsform, bei der das Federelement 130 in das Sensorgehäuse 110 integriert ist. Die einzelnen Elemente des Federelements 130 von Fig. 12 entsprechen denjenigen des Spritzgussteils 800 von Fig. 8 und umfassen den umlaufenden Ring 810, die elastischen Arme 820, die radialen Vorsprünge 830, die als Verbindungsabschnitte 132 wirken, und den axialen Vorsprung 840, der als Drehbegrenzungselement 134 dient. Da die Funktionalität dieser Elemente 810 bis 840 derjenigen der entsprechenden Elemente des Spritzgussteils 800 entspricht, wird die Funktionalität dieser Elemente an dieser Stelle nicht erneut beschrieben.

Die Ausführungsform, die in Fig. 12 gezeigt ist, umfasst aufgrund der Integration des Federelements 130 in das Sensorgehäuse 110 weniger Teile als die vorstehend beschriebenen Ausführungsformen. Die Auswahl des Werkstoffs, aus dem das Federelement 130 hergestellt wird, kann jedoch bei der Ausführungsform von Fig. 12 nicht unabhängig von der Auswahl des Werkstoffs für das Sensorgehäuse 110 erfolgen.

### Bezugszeichenliste

- 100: Prozessanschluss
- 110: Sensorgehäuse
- 120: Verbindungsvorrichtung
- 122: innerer Anschlussabschnitt
- 124: äußerer Anschlussabschnitt
- 126: Innenseite des äußeren Anschlussabschnitts
- 128: komplementäres Element
- 130: Federelement
- 132: Verbindungsabschnitt
- 134: Drehbegrenzungselement
- 140: zentrale Achse
- 150: O-Ring
- 160: Öffnung in dem inneren Anschlussabschnitt
- 170: Vorsprung an der Innenseite des äußeren Anschlussabschnitt
- 200: Drahtelement
- 210: Verbindungsbogen
- 220: Endabschnitt des Drahtelements
- 310: Vorspannkraft
- 320: Verschiebung in axialer Richtung
- 330: Aussparung am inneren Anschlussabschnitt
- 340: Positionierungsstift
- 350: Verschiebungsstift
- 370: Aussparung an der Stirnseite des äußeren Anschlussabschnitts
- 410: Kraft in axialer Richtung
- 510: Rand der Aussparung im äußeren Anschlussabschnitt
- 701: erster Endabschnitt
- 702: zweiter Endabschnitt
- 710: Positionierungsstift
- 720: Fräskontur
- 800: Spritzgussteil
- 810: umlaufender Ring
- 820: Arm
- 822: Lücke zwischen Arm und umlaufendem Ring
- 830: Vorsprung in radialer Richtung
- 840: Vorsprung in axialer Richtung
- 850: Aussparung an der Stirnseite des äußeren Anschlussabschnitts
- 860: Rand der Aussparung
- 920: im Uhrzeigersinn ausgerichteter Arm
- 922: gegen den Uhrzeigersinn ausgerichteter Arm
- 930: Vorsprung am im Uhrzeigersinn ausgerichteten Arm
- 932: Vorsprung am gegen den Uhrzeigersinn ausgerichteten Arm
- 940: Aussparung am Vorsprung
- 942: Teilabschnitt des inneren Anschlussabschnitts
- 950: ringförmiges Blechteil
- 960: Lücke in Umfangsrichtung
- 970: Vorsprung in radialer Richtung nach außen
- 980: Vorsprung in radialer Richtung nach innen
- 990: radiale Aussparung am äußeren Anschlussabschnitt

## Patentansprüche

1. Verbindungsvorrichtung (120) für einen Prozessanschluss (100) an einem Sensorgehäuse (110), umfassend:
einen inneren Anschlussabschnitt (122), der an dem Sensorgehäuse (110) oder an dem Prozessanschluss (100) angeordnet ist,
einen äußeren Anschlussabschnitt (124), der den inneren Anschlussabschnitt (122) umgibt,
wobei der äußere Anschlussabschnitt (124) an dem Prozessanschluss (100) angeordnet ist, wenn der innere Anschlussabschnitt (122) an dem Sensorgehäuse (110) angeordnet ist, oder der äußere Anschlussabschnitt (124) an dem Sensorgehäuse (110) angeordnet ist, wenn der innere Anschlussabschnitt (122) an dem Prozessanschluss (100) angeordnet ist,
ein Federelement (130), das teilweise innerhalb des inneren Anschlussabschnitts (122) angeordnet ist,
wobei das Federelement (130) mindestens drei Verbindungsabschnitte (132) aufweist, die sich jeweils durch eine jeweilige Öffnung (160) in dem inneren Anschlussabschnitt (122) hindurch erstrecken und mit einer Innenseite (126) des äußeren Anschlussabschnitts (124) in Verbindung stehen.

2. Verbindungsvorrichtung (120) nach Anspruch 1, wobei das Federelement (130) zumindest ein Drehbegrenzungselement (134) aufweist, welches mit zumindest einem komplementären Element (128), das an dem äußeren Anschlussabschnitt (124) angeordnet ist, in Eingriff bringbar ist, um dadurch einen Winkel zu begrenzen, um den das äußere Anschlusselement (124) relativ zu dem inneren Anschlusselement (122) in deren Umfangsrichtung drehbar ist.

3. Verbindungsvorrichtung (120) nach Anspruch 2, wobei das Federelement (130) als ringförmig gebogenes Drahtelement (200) mit offenen Enden ausgebildet ist,
der jeweilige Verbindungsabschnitt (132) als jeweiliger Verbindungsbogen (220) ausgebildet ist, der sich von einem Umfang des Drahtelements (200) nach außen erstreckt, und
das Drehbegrenzungselement (134) zumindest einen von zwei Endabschnitten (210) des Drahtelements (200) umfasst.

4. Verbindungsvorrichtung (120) nach Anspruch 3, wobei das komplementäre Element (128), das an dem äußeren Anschlussabschnitt (124) angeordnet ist, mindestens einen Stift (340, 710) umfasst, mit dem einer der zwei Endabschnitte (210, 701) in Eingriff bringbar ist.

5. Verbindungsvorrichtung (120) nach Anspruch 3 oder 4, wobei das komplementäre Element (128) eine Aussparung (370) an dem äußeren Anschlussabschnitt (124) umfasst, mit der zumindest einer der zwei Endabschnitte (210, 702) in Eingriff bringbar ist.

6. Verbindungsvorrichtung (120) nach Anspruch 2, wobei
das Federelement (130) als Kunststoffteil (800), insbesondere als Spritzgussteil, ausgebildet ist, von dessen Umfang sich die Verbindungsabschnitte (132, 830) radial nach außen erstrecken, und
das Drehbegrenzungselement (134) als Vorsprung (840) ausgebildet ist, der sich in einer axialen Richtung des Kunststoffteils (800) erstreckt und mit einer Aussparung (850) an dem äußeren Anschlusselement (124), die das komplementäre Element (128) bildet, in Eingriff bringbar ist.

7. Verbindungsvorrichtung (120) nach Anspruch 6, wobei mindestens einer der Verbindungsabschnitte (132, 830) in Umfangsrichtung entgegengesetzt zu einem anderen Verbindungsabschnitten (132, 830) ausgerichtet ist.

8. Verbindungsvorrichtung (120) nach Anspruch 6 oder 7, wobei das Federelement (130) mindestens vier Verbindungsabschnitte (132, 830) aufweist, die sich von dem Umfang des Kunststoffteils (800) radial nach außen erstrecken.

9. Verbindungsvorrichtung (120) nach Anspruch 8, wobei jeweils zwei der Verbindungsabschnitte (132, 830) in Umfangsrichtung paarweise entgegengesetzt zueinander angeordnet sind.

10. Verbindungsvorrichtung (120) nach einem der Ansprüche 6 bis 9, wobei das Federelement (130) in das Sensorgehäuse (110) oder in den Prozessanschluss (100) integriert ist.

11. Verbindungsvorrichtung (120) nach Anspruch 1, wobei
das Federelement (130) als ein ringförmiges Blechteil (950) ausgebildet ist, das in Umfangsrichtung ein Lücke (960) aufweist, und
sich die Verbindungsabschnitte (132, 970) radial nach außen erstrecken.

12. Verbindungsvorrichtung (120) nach Anspruch 11, wobei
das ringförmige Blechteil (950) zumindest ein Drehbegrenzungselement (980) aufweist, welches mit zumindest einem komplementären Element (128), das an dem äußeren Anschlussabschnitt (124) angeordnet ist, in Eingriff bringbar ist, um dadurch einen Winkel zu begrenzen, um den das äußere Anschlusselement (124) relativ zu dem inneren Anschlusselement (122) in deren Umfangsrichtung drehbar ist, und
sich das Drehbegrenzungselement (980) radial nach innen oder in axialer Richtung erstreckt.

13. Verfahren zum Verbinden eines Prozessanschlusses (100) mit einem Sensorgehäuse (110),
wobei das Sensorgehäuse (110) einen inneren Anschlussabschnitt (122) aufweist, während der Prozessanschluss (100) einen äußeren Anschlussabschnitt (124) aufweist, oder wobei das Sensorgehäuse (110) den äußeren Anschlussabschnitt (124) aufweist, während der Prozessanschluss (100) den inneren Anschlussabschnitt (122) aufweist,
wobei das Verfahren umfasst, dass:
ein Federelement (130), das mindestens drei Verbindungsabschnitte (132) aufweist, innerhalb des inneren Anschlussabschnitts (122) angeordnet wird,
der innere Anschlussabschnitt (122) innerhalb des äußeren Anschlussabschnitts (124) angeordnet wird,
der innere Anschlussabschnitt (122) und der äußere Anschlussabschnitt (124) in einer axialen und/oder einer Umfangsrichtung des inneren und äußeren Anschlussabschnitts (122, 124) relativ zueinander verschoben werden, um dadurch das Federelement (130) derart zu verschieben, dass sich die mindestens drei Verbindungsabschnitte (132) des Federelements (130) jeweils durch eine jeweilige Öffnung (160) in dem inneren Anschlussabschnitt (122) hindurch erstrecken und eine Verbindung mit einer Innenseite (126) des äußeren Anschlussabschnitts (124) herstellen.
